# EUROPEAN PATENT SPECIFICATION

(11) **EP 1 342 533 B1**
(45) Date of publication and mention of the grant of the patent: **25.06.2008**
(21) Application number: 03002596.9
(22) Date of filing: 07.02.2003
(51) Int. Cl.: B23Q 3/155, B25B 11/00

(54) **Automatic machine for working materials in sheet form, particularly glass sheets**
Automatische Maschine zum Bearbeiten plattenförmiger Werkstücke, insbesondere von Glasplatten
Dispositif automatique pour manipuler des plaques, en particulier des plaques en verre

(30) Priority: 12.02.2002 IT MI20020267
(43) Date of publication of application: 10.09.2003
(73) Proprietor: GLASTON ITALY SPA, 22070 Bregnano (CO) (IT)
(72) Inventor: Bavelloni, Franco, 22020 San Fermo Della Battaglia (Como) (IT)
(74) Representative: Modiano, Micaela Nadia

(56) References cited:
- DE-A- 3 325 207
- US-A- 3 851 364
- US-A- 4 685 850
- US-A- 5 376 062
- US-A- 5 385 184
- US-A- 5 562 276
- US-A- 5 713 118
- US-B1- 6 186 567

## Description

The present invention relates to an automatic machine for working materials in sheet form, particularly glass sheets.

It is known that in automatic machines for working materials in sheet form and particularly in machines that perform the perimetric edge and surface working of glass sheets, the sheets are held in position on the worktable of the machine by means of suction cups that are structured so as to connect to the worktable and define, in an upward region, a plurality of suction cups for supporting the sheet being worked.

If the suction cup elements must also position the sheet on the worktable, so that the machine can perform the intended work steps in automatic succession, the suction cup elements must be applied exactly in a preset position.

With currently known solutions, it is the operator who manually positions the suction cups, arranging them according to templates or optionally by utilizing the automatic systems of the machine, which indicate precisely where the suction cups are to be applied.

This solution is hardly practical, both because the operator must in practice climb onto the worktable, in the case of large dimensions with placement of the suction cup elements at a certain distance from the edge, and because positioning correctness is in practice eventually entrusted to the meticulousness of the operator.

Another problem consists in that the operator must in practice lean over a region where the working head is present, with consequent safety-related risks.

Other known solutions use the working head to position the suction cups, but the hoses that convey the air must be connected manually to the already-positioned suction cups, with the risk of moving said suction cups and with the previously noted safety problems for the operator.

Moreover, suction cups provided with centering or positioning elements must be positioned manually, and therefore automatic positioning of only some of the suction cups is certainly not very useful.

Document US-A-5,376,062 describes a robotic manufacturing unit with automatic tool changer according to the preamble of claim 1 which includes a stand that defines a working space and accommodates a working surface. Above the stand an output member is supported which is operated to move in three-dimensional space. Further, a tool-holding and changing member is attached to the output member and is adapted to retain shanks of tool carriers. The manufacturing unit further includes a tool tray adapted to accommodate a plurality of tools mounted on tool carriers.

Moreover, document US 5,376,062 describes a fixturing system for workpieces composed of a body block and a handling block which is positioned at a predetermined location of the working surface by the tool-holding and changing member. After positioning, the handling block is removed and the body block initially remains firmly attached to the working surface through the action of vacuum applied thereto through the handling block.

Further machines for working materials in sheet form including suction cup elements are known from documents US-A-5562276 and US-A-6186567.

The aim of the present invention is to eliminate the above mentioned drawbacks, by providing an automatic machine for working materials in sheet form, particularly glass sheets, that allows to automatically position the suction cup elements in several points of the worktable that can be preselected at will without requiring the manual intervention of the operator.

Within this aim, an object of the present invention is to provide an automatic machine in which it is possible to achieve absolute positioning precision while keeping the operator at all times outside the working area, thus achieving considerable safety in operation.

Another object of the invention is to provide an automatic machine in which it is possible to achieve highly repeatable positioning, with a consequent optimum quality of results.

Another object of the present invention is to provide an automatic machine that can be easily obtained starting from commonly commercially available elements and materials and is further competitive from a merely economical point of view.

This aim and these and other objects that will become better apparent hereinafter are achieved by an automatic machine for working materials in sheet form, according to claim 1.

Further characteristics and advantages will become better apparent from the following detailed description of a preferred but not exclusive embodiment of an automatic machine for working materials in sheet form, particularly glass sheets, illustrated only by way of non-limitative example in the accompanying drawings, wherein:
Figure 1 is a schematic plan view of the automatic machine according to the present invention;
Figure 2 is a partially cutout elevation view of the automatic machine;
Figure 3 is a front elevation view of the positioning of the pick-up tool in the tool holder magazine;
Figure 4 is a top plan view of the positioning of the pick-up tool in the tool magazine;
Figure 5 is a schematic perspective view of a clamp-type pick-up tool during its approach to a suction cup element located in the suction cup element magazine;
Figure 6 is a perspective view of a pneumatic pick-up tool during approach to a suction cup element in the tool holder magazine;
Figure 7 is a perspective view of the coupling between the pneumatic pick-up tool and the suction cup element;
Figure 8 is a view of the step for picking up the suction cup element with centering device;
Figure 9 is a sectional view of the pneumatic pick-up tool;
Figure 10 is a view of an automatic suction cup element rested on the magazine;
Figure 11 is a view of an automatic suction cup element rested on the worktable;
Figure 12 is a schematic view of a machine with a suction cup magazine;
Figure 13 is an elevation view of the suction cup magazine, illustrating the hose connection sheath;
Figure 14 is a view of a suction cup with centering element, provided with orientable connectors for the air hoses.
Figure 15 is an exploded perspective view of another embodiment of a pneumatic pick-up tool for suction cup with centering device;
Figure 16 is a bottom perspective view of the pick-up tool with a suction cup with centering device;
Figure 17 is a sectional view of the pick-up tool connected to a suction cup with centering device.

With reference to the figures, the automatic machine for working materials in sheet form, particularly glass sheets, according to the invention, generally designated by the reference numeral 1, comprises a supporting framework 2 which, in a per se known manner, has a worktable 3 on which it is possible to position the sheets 4, particularly glass sheets, which must be subjected to perimetric edge and/or surface working, which can be constituted for example by working the edges or by working performed on the surface of the sheet.

The sheet 4 is kept in position by means of suction cup elements, designated by the reference numeral 5, and by means of suction cup elements with a centering device, which are designated by the reference numeral 6. The suction cup elements 5 and 6 are of a per se known kind and are respectively designed to retain the sheet, and, to retain it and also provide, by means of the centering device, locators for correctly positioning the sheet to be worked.

The suction cup elements 5 and 6 are connected, in a per se known manner, by way of lines 7, to a vacuum source VS in order to fix, in a known manner, the suction cup elements to the working table 3 and the sheet 4 to the suction cup elements.

The lines 7 are preferably of the spiral type, differently from what occurs in the prior art, in which the straight hoses must be cut to size in each instance according to the distance between the suction cup element and the manifold for connection to the vacuum source, thus increasing machine preparation times.

Laterally adjacent to the worktable 3 there is a tool magazine, generally designated by the reference numeral 8, on which the tools picked in succession by the working head 9 to perform the various working steps are arranged.

The working head 9 is connected to a frame 10 that lies above the worktable 3, so as to allow the working head 9 to perform movements above the worktable in both directions.

Furthermore, the working head 9, in a per se known manner, has movements about its vertical axis, which is commonly known as C axis.

In these kinds of machine it is necessary to position the suction cup elements, and especially for suction cup elements provided with a centering device 6 it is necessary to perform precise positioning, because such elements are those that allow to provide the corresponding positioning of the sheet to be subsequently worked.

The particularity of the invention consists in that there is a pick-up tool, generally designated by the reference numeral 20, which can be arranged in the tool magazine 8 and can be picked up by the working head 9 to perform, in automatic succession, the transfer of the suction cup elements 5 and 6 onto the worktable, said elements being taken from a suction cup element magazine 15, on which the suction cup elements are arranged; said suction cup elements are picked up by the working head and placed precisely in the intended point of the worktable 3; the number of suction cup elements provided on the magazine can vary according to the productivity requirements of the machine.

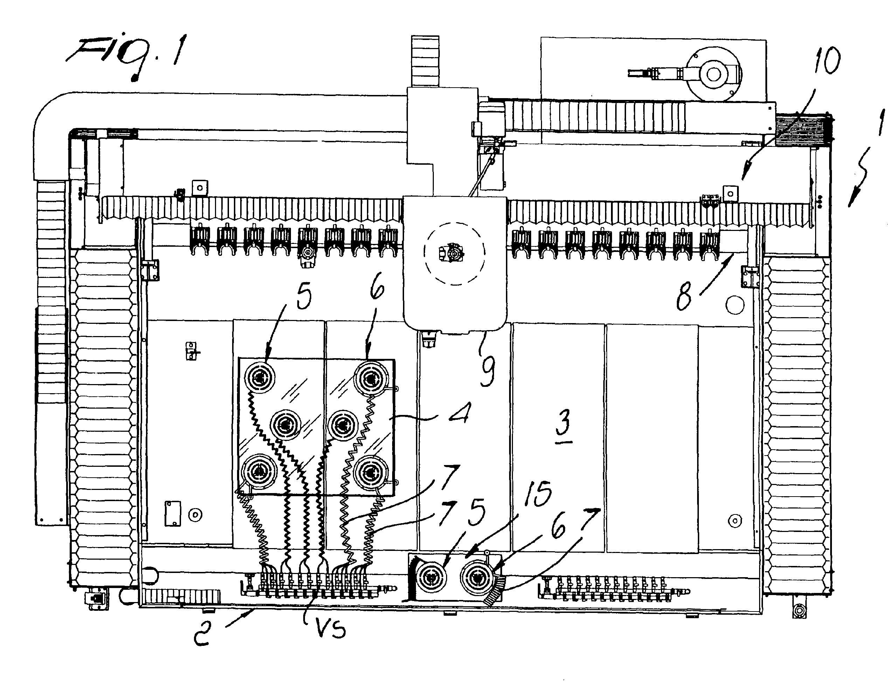

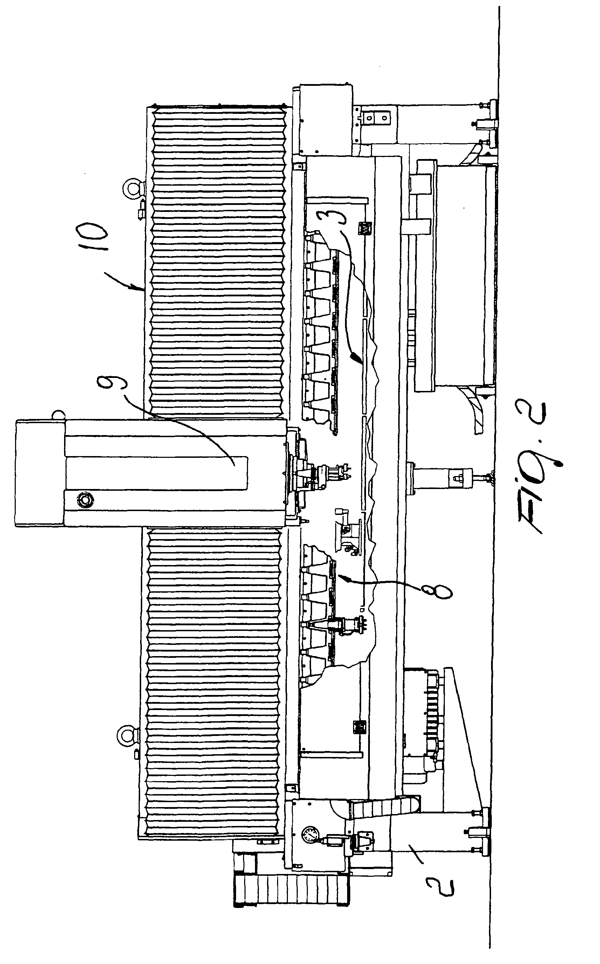

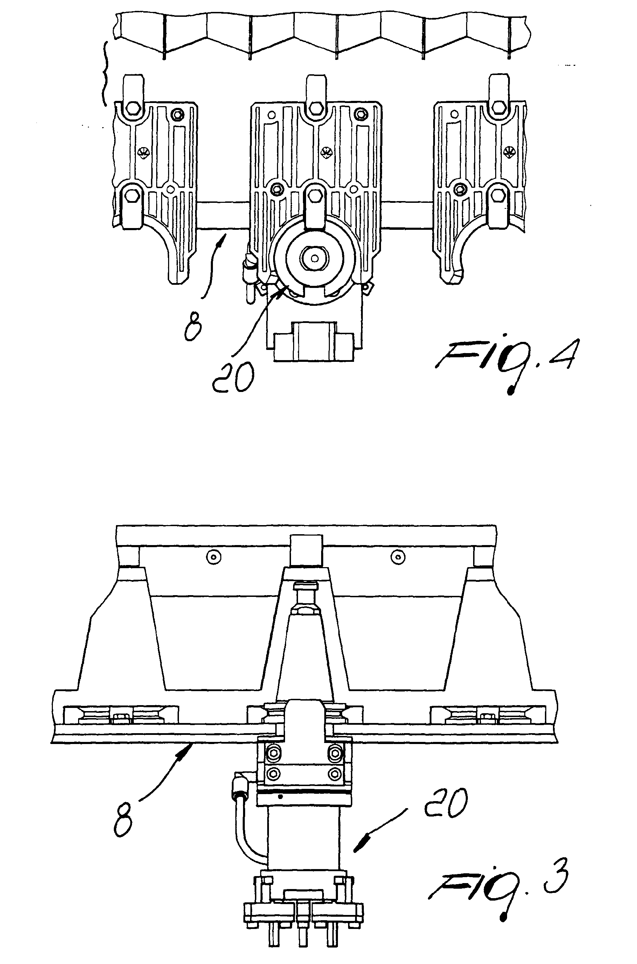

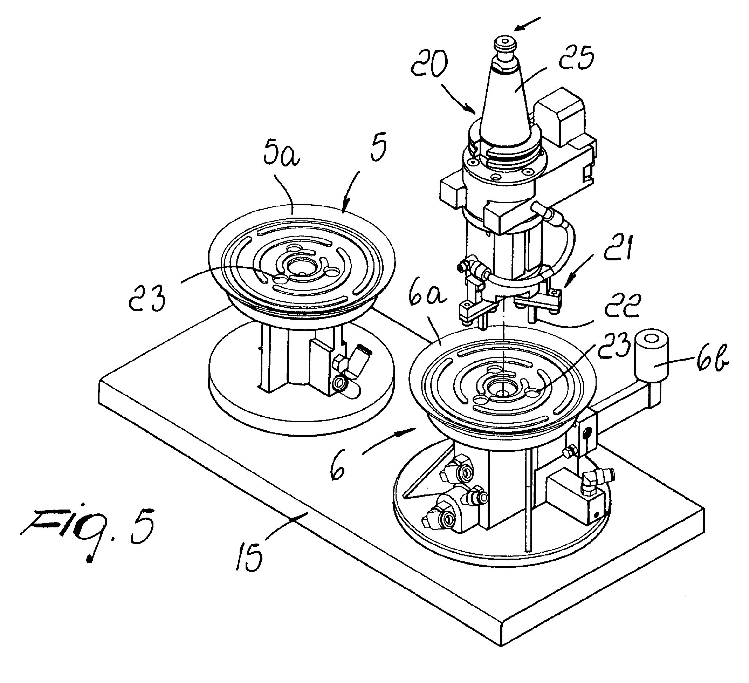

As shown in Figures 1 to 5, there is a pick-up tool 20 that is provided with grip clamps, generally designated by the reference numeral 21, which are constituted in practice by pins 22 that can move radially and can be inserted in centering holes 23 formed in the suction cup elements 5 and in the suction cup elements 6.

The pick-up action performed in a central position, with respect to the upper part of the suction cup element, allows to have a single pick-up tool regardless of the dimensions of the suction cup element.

The pick-up element or tool 20 is provided with the typical cone 25 for its connection to the working head.

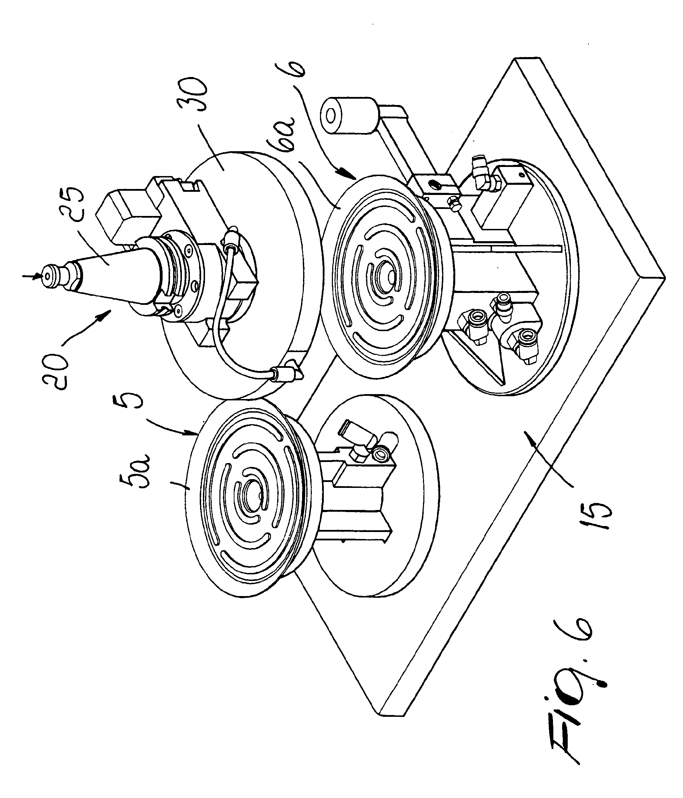

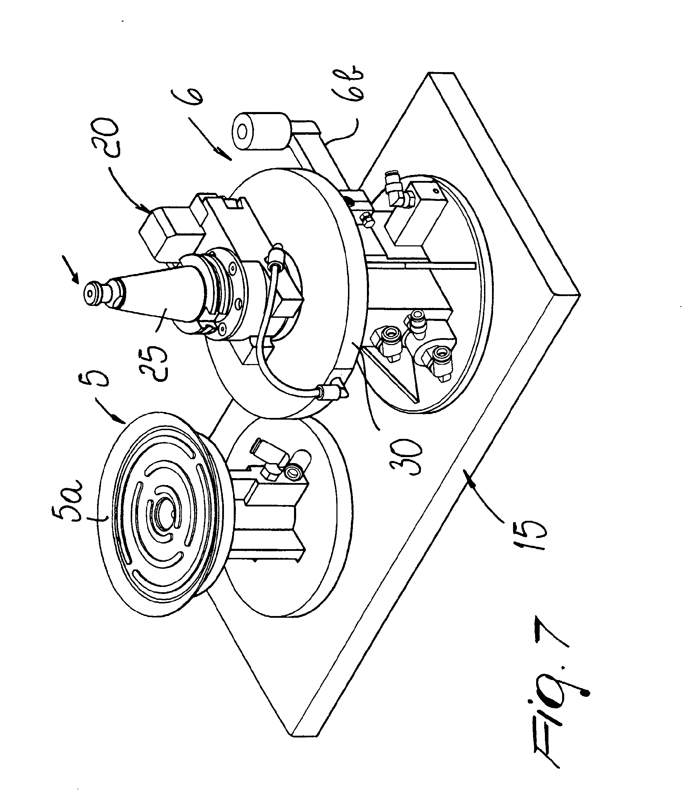

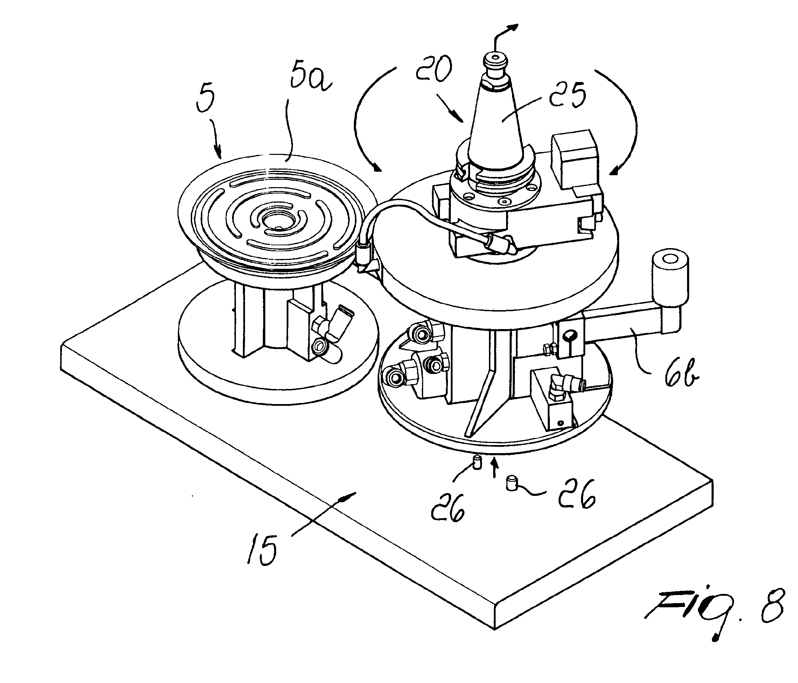

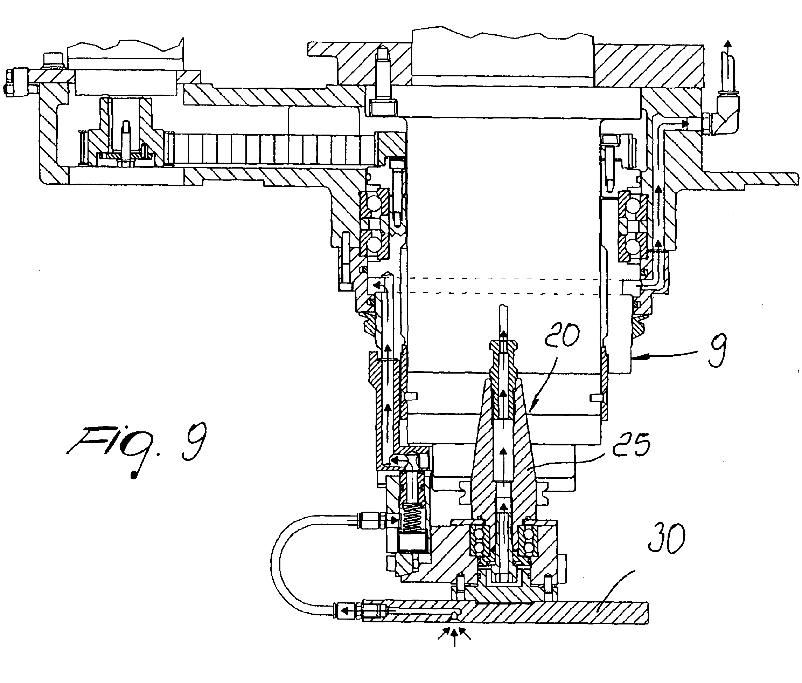

According to a different structural embodiment of the pick-up element 20, and according to what is shown in Figures 6 to 9, the pick-up element 20 can have a pneumatic plate 30, which can be connected to the vacuum source VS provided in the machine by means of a connection that can be provided directly on the working axis or optionally by means of the lateral outlet of the pick-up element body, which is otherwise closed.

The vacuum plate, by engaging the suction cups 5a and 6a provided in an upward region with respect to the suction cup elements 5 and 6, can perform engagement in a very practical and rapid manner, thus allowing to pick up the suction cup elements and convey them until they are positioned.

It should be added to the above that in the suction cup element magazine 15 there are positioning means 26 for the orientated positioning of the suction cup elements, which are constituted by two pin elements of mutually different sizes that force a single positioning, so that the suction cup elements with centering device are positioned so that the centering device, designated by the reference numeral 6b, is always in the same angular position.

In this manner, the working head, by means of the pick-up tool, picks up the suction cup element and can perform the preset angular rotation, thus achieving a precise angular positioning of the centering device.

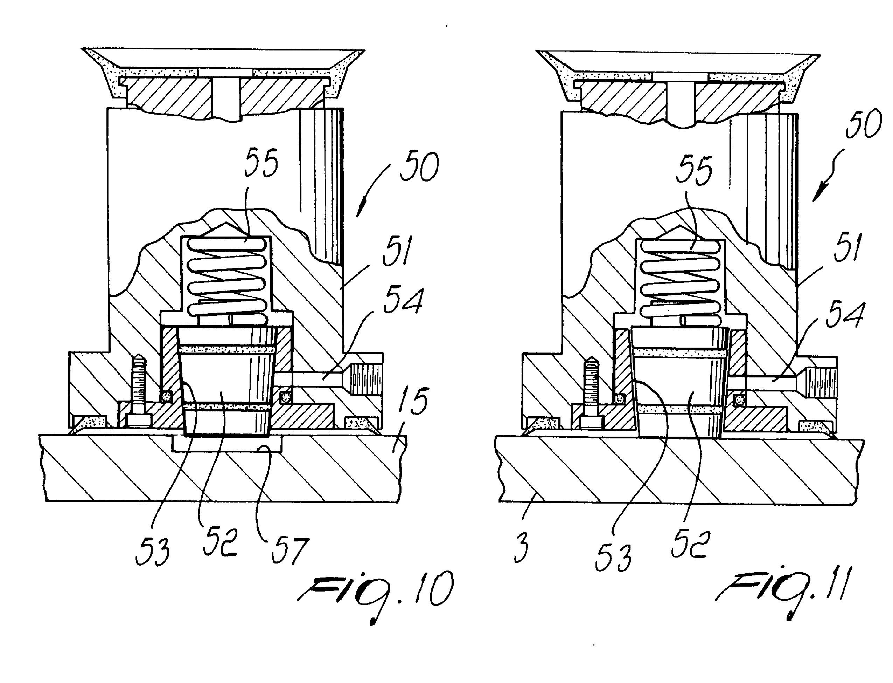

As shown in Figure 10 and 11, it is possible to use automatic suction cup elements 50, by means of which the connection to the vacuum source VS is provided automatically as soon as the suction cup elements are positioned on the worktable.

For this purpose, on the body 51 of the automatic suction cup element 50 there are control means, constituted by a flow control element 52 contained in a seat 53 into which the lower intake duct 54 leads; the flow control element is pushed by elastic means, such as a spring 55 and its lower end protrudes from the lower face of the body 51.

By resting the suction cup element 50 on the worktable 3, the actuator 52 is moved upward and, by being frustum-shaped, frees the connection to the duct 54; the vacuum that locks in position the suction cup element is thus generated automatically.

A recess 57 is provided on the magazine 15, at the region affected by the suction cup element, in order to avoid disengaging of the flow control element and allow the suction cup element to be picked up.

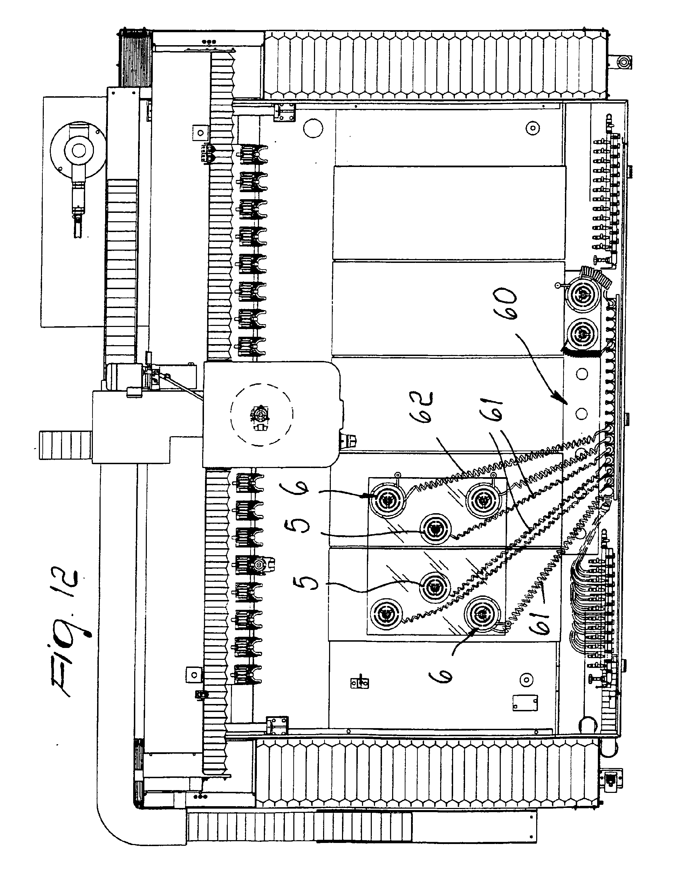

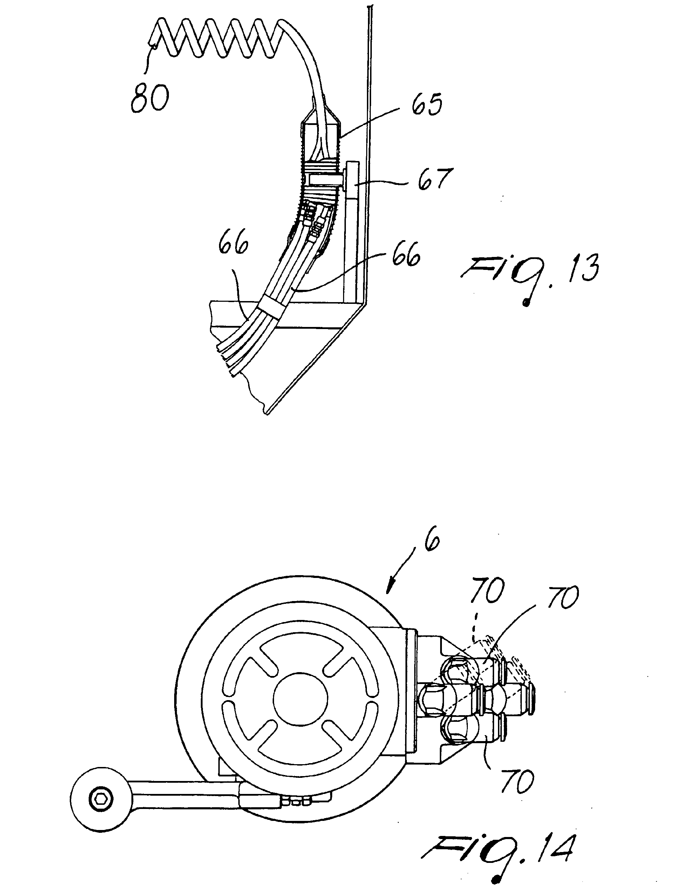

Specifically with reference to Figures 12 and 13, the machine can be provided with a suction cup magazine, designated by the reference numeral 60, which is preset to allow the simultaneous positioning of a number of suction cup elements, again designated by the reference numerals 5 and 6, sufficient for at least one working station.

In the specific example shown, the suction cup magazine is preset to accommodate the suction cups in two separate working stations that are formed on the same working surface.

The particularity of the present invention consists in that the suction cup elements are already connected to the corresponding duct and in particular flexible spiral hoses, designated by the reference numeral 61, which are provided for two ducts and are used for the suction cups 5, and flexible spiral hoses 62 which are provided having four ducts and are used for the suction cups having a positioning element.

To perform the connection, there is a connection sheath 65 for the semirigid hoses 66 that connect to the air and vacuum manifolds 80.

The sheaths 65 can be coupled in sheath retainers or rack 67 provided on the suction cup magazine 60.

In this manner it is possible to perform automatic positioning of the suction cups, which is performed by the machine by virtue of an appropriate program that reduces drastically the machine setup times, and the operator works in full safety without climbing on and off the machine.

Moreover, the fact that the magazine contains a sufficient number of suction cups to prepare at least one working station allows the pick-up tool to position the suction cups automatically in succession without having to remove the connection hoses that are fixed in the clips of the sheath retainers 67.

By way of the management program, the machine can perform the sequential positioning of the suction cups without overlapping the spiral hoses and without hindrances caused by already-positioned suction cups.

To facilitate the connection of the suction cups 6 provided with a centering element, for which the orientation around the so-called C axis or vertical axis cannot be changed, advantageously there are, as shown in Figure 14, rotary connectors with orientation means 70 for inlets of the four hoses, thus allowing to facilitate the orientation of the hoses and to reduce overlaps or the possibility of bends.

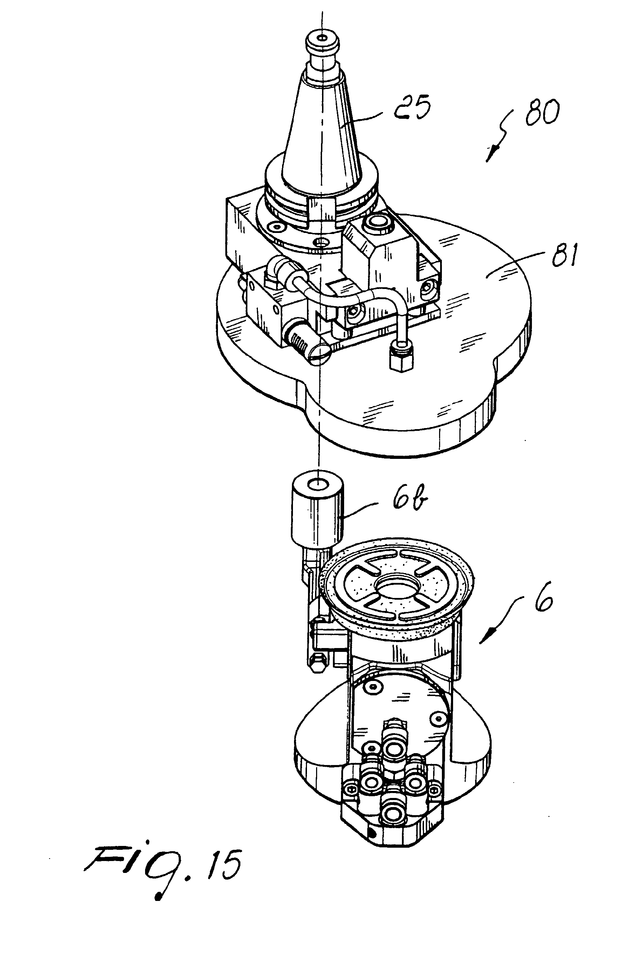

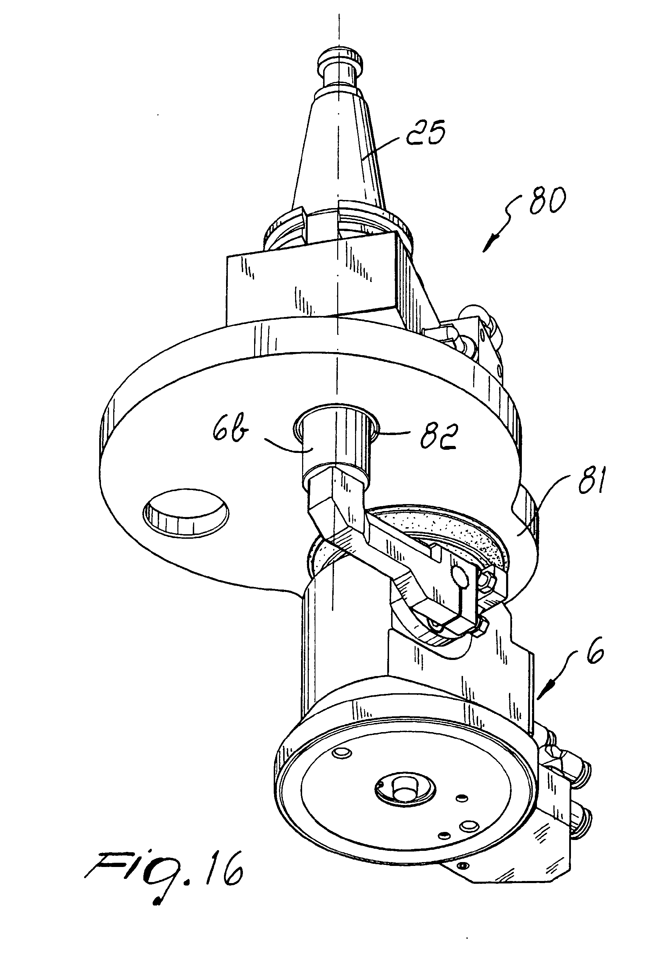

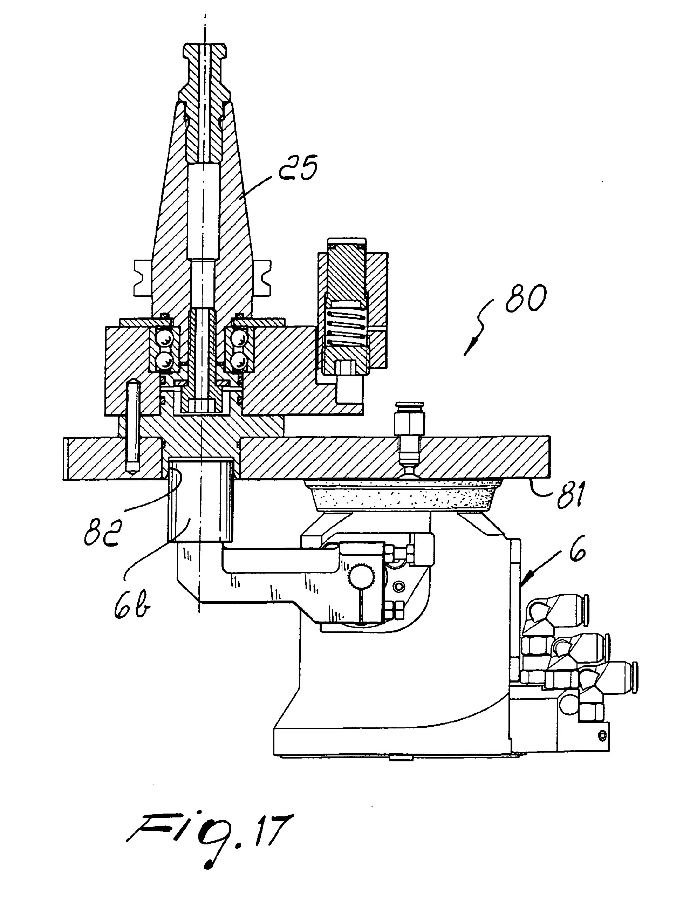

With reference to Figures 15 to 17, a precision pick-up element is shown and is designated by the reference numeral 80; said element is provided with the usual cone 25 for connection to the working head, and a particularity of the invention consists in that the precision pick-up element 80 has an eccentric pneumatic plate 81, which is arranged laterally with respect to the axis of the cone to pick up the suction cup with centering device; in order to ensure the correct arrangement of the centering device 6b, on the pick-up element 80 there is provided, in axial alignment with the cone 25, a seat 82 in which the centering device 6b can be positioned detachably.

In this embodiment, therefore, it is possible to achieve a considerable precision in positioning the centering device, which is axially aligned with the cone of the pick-up element, so that offsets caused, at positioning time, by plays that can occur on the elastic elements constituted by the suction cups cannot occur.

The positioning of the centering device 6b in axial alignment with the cone 25 allows to position the elements with considerable assurance as regards the correctness of their position without having to consider displacements of the centering device caused by the rotation of the suction cup 6.

In practical operation, therefore, the machine can be programmed to use the pick-up tool like any other tool, taking it automatically from the tool magazine and with the possibility to pick up the various suction cup elements, positioning them on the worktable very rapidly and safely by achieving their automatic locking when release occurs.

It should also be noted that the pick-up tool is structured so that it can engage the suction cup elements regardless of the dimensions of the upper suction cup and always so as to allow precise angular positioning.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automatic machine for working materials in sheet form, particularly glass sheets, comprising a supporting framework (2) that has a worktable (3) for supporting the sheets (4) being worked by way of suction cup elements (5,6,50), and a tool magazine (8), a frame (10) for supporting a working head (9) being associated with said framework (2), said working head (9) being able to move above said worktable (3), and a pick-up tool (20) that can be moved by said working head (9) in order to pick up suction cup elements (5,6,50) from a magazine (15,60) of suction cup elements and position the suction cup elements (5,6,50) on said worktable (3) and/or vice versa, **characterized in that** said suction cup elements (5,6,50) are directly connected to air and vacuum hoses (7, 61,62) and **in that** said automatic machine further comprises a precision pick-up tool (80) that has a pneumatic plate (81) arranged eccentrically with respect to the axis of a cone (25) for connection to the working head, a seat (82) being formed on the pick-up element in axial alignment with said cone (25) in order to detachably accommodate a centering device (6b) of a suction cup (6) with centering device.

2. The automatic machine according to claim 1, **characterized in that** said suction cup magazine (15,60) allows positioning of a number of suction cup elements (5,6,50) sufficient at least for one working station.

3. The automatic machine according to anyone of the preceding claims, **characterized in that** said pick-up tool (20) can be positioned removably in said tool magazine (8).

4. The automatic machine according to the preceding claims, **characterized in that** said pick-up tool (20) has a grip clamp (21) constituted by radially movable pins (22) that are inserted in centering holes (23) provided in the upper part of said suction cup elements (5,6,50).

5. The automatic machine according to one or more of the preceding claims, **characterized in that** said pick-up tool (20) comprises a pneumatic plate (30) that can be connected to a source of vacuum (VS) and can engage the suction cups (5a,6a) arranged at an upper end of said suction cup elements (5,6,50).

6. The automatic machine according to one or more of the preceding claims, **characterized in that** it comprises, on said suction cup element magazine (15,60), positioning means (26) for said suction cup elements (5,6,50).

7. The automatic machine according to claim 6, **characterized in that** said positioning means (26) for said suction cup elements (5,6,50) are constituted by two mutually different pin elements.

8. The automatic machine according to claim 7, **characterized in that** said pin elements (26) have mutually different dimensions.

9. The automatic machine according to anyone of the preceding claims, **characterized in that** it comprises, in said suction cup magazine (60), a sheath locking rack (67) for retaining the sheaths (65) for connecting the spiral hoses (61,62) of said suction cup elements (5,6,50) and the semirigid hoses (66) for connection to the air and vacuum manifolds.

10. The automatic machine according to one or more of the preceding claims, **characterized in that** it comprises, at least on said suction cup elements (6) with centering element (6b), connectors (70), for connection to the hoses (66), provided with orientation means.

11. The automatic machine according to one or more of the preceding claims, **characterized in that** it comprises automatic suction cup elements (50) that comprise, on the suction cup body (51), a lower suction cup and delimit a region that is connected to a lower intake duct (54) for connection to a vacuum source (VS), **characterized in that** it comprises control means (52) for controlling said lower intake duct (54) which are adapted to free connection to said region connected to said intake duct (54) when the suction cup element (50) is rested automatically on said worktable (3).

12. The automatic machine according to claim 11, **characterized in that** said control means comprises a flow control element (52) that is contained in a seat (53) into which said lower intake duct (54) leads, the lower end of said flow control element (52) protruding from the lower face of said suction cup body (51).

13. The machine according to claim 12, **characterized in that** it comprises elastic means (55) suitable to push said flow control element (52).

14. The machine according to one or more of the claims 12 and 13, **characterized in that** said flow control element (52) is frustum-shaped.

## Patentansprüche

1. Eine automatische Vorrichtung zur Bearbeitung von Materialien in Plattenform, insbesondere Glasplatten, die Folgendes umfasst: einen Stützrahmen (2), der einen Werktisch (3) hat, um die Platten (4), die bearbeitet werden, mit Hilfe von Saugnapf-Elementen (5, 6, 50) zu tragen, und ein Werkzeugmagazin (8), wobei ein Rahmen (10) zum Tragen eines Verarbeitungskopfs (9) mit dem Stützrahmen (2) verknüpft ist, wobei der Verarbeitungskopf (9) sich über dem Werktisch (3) bewegen kann, und ein Aufnahmewerkzeug (20), das vom Verarbeitungskopf (9) bewegt werden kann, um Saugnapf-Elemente (5, 6, 50) aus einem Magazin (15, 60) von Saugnapf-Elementen zu entnehmen und die Saugnapf-Elemente (5, 6, 50) auf dem Werktisch (3) zu positionieren und/oder umgekehrt, **dadurch gekennzeichnet, dass** die Saugnapf-Elemente (5, 6, 50) direkt mit Luft- und Unterdruckschläuchen (7, 61, 62) verbunden sind, dadurch dass die automatische Vorrichtung weiterhin Folgendes umfasst ein Präzisions-Aufnahmewerkzeug (80), das eine pneumatische Platte (81) hat, welche exzentrisch zur Achse eines Kegels (25) zur Verbindung mit dem Verarbeitungskopf angeordnet ist, wobei ein Sitz (82) in axialer Ausrichtung mit dem Kegel (25) auf dem Aufnahmeelement gebildet ist ist, um lösbar eine Zentriervorrichtung (6b) eines Saugnapfs (6) mit Zentriervorrichtung aufzunehmen.

2. Die automatische Vorrichtung gemäß Anspruch 1, **dadurch gekennzeichnet, dass** das Saugnapf-Magazin (15, 60) die Positionierung einer Anzahl von Saugnapf-Elementen (5, 6, 50) ermöglicht, die für mindestens eine Arbeitsstation ausreicht.

3. Die automatische Vorrichtung gemäß irgendeinem der obigen Ansprüche, **dadurch gekennzeichnet, dass** das Aufnahmewerkzeug (20) lösbar in dem Werkzeugmagazin (8) positioniert sein kann.

4. Die automatische Vorrichtung gemäß den obigen Ansprüchen, **dadurch gekennzeichnet, dass** das Aufnahmewerkzeug (20) eine Greifklemme (21) hat, die aus radial beweglichen Stiften (22) besteht, welche in Zentrierbohrungen (23) eingeführt sind, die in dem oberen Teil der Saugnapf-Elemente (5, 6, 50) bereitgestellt werden.

5. Die automatische Vorrichtung gemäß einem oder mehreren der obigen Ansprüche, **dadurch gekennzeichnet, dass** das Aufnahmewerkzeug (20) eine pneumatische Platte (30) umfasst, die mit einer Unterdruck-Quelle (VS) verbunden werden kann und die in die Saugnäpfe (5a, 6a) eingreifen kann, die an einem oberen Ende der Saugnapf-Elemente (5, 6, 50) angeordnet sind.

6. Die automatische Vorrichtung gemäß einem oder mehreren der obigen Ansprüche, **dadurch gekennzeichnet, dass** sie am Saugnapf-Element-Magazin (15, 60) Positioniermittel (26) für die Saugnapf-Elemente (5, 6, 50) umfasst.

7. Die automatische Vorrichtung gemäß Anspruch 6, **dadurch gekennzeichnet, dass** die Positioniermittel (26) für die Saugnapf-Elemente (5, 6, 50) aus zwei voneinander verschiedenen Stiftelementen bestehen.

8. Die automatische Vorrichtung gemäß Anspruch 7, **dadurch gekennzeichnet, dass** die Stiftelemente (26) voneinander verschiedene Maße haben.

9. Die automatische Vorrichtung gemäß irgendeinem der obigen Ansprüche, **dadurch gekennzeichnet, dass** sie in dem Saugnapf-Magazin (60) ein Hülsen-Sicherungsgestell (67) umfasst, zum Halten der Hülsen (65) zur Verbindung der Spiralschläuche (61, 62) der Saugnapf-Elemente (5, 6, 50) und der halbsteifen Schläuche (66) zur Verbindung mit den Luft- und Unterdruckverteilern.

10. Die automatische Vorrichtung gemäß einem oder mehreren der obigen Ansprüche, **dadurch gekennzeichnet, dass** sie mindestens an den Saugnapf-Elementen (6) mit Zentrierelement (6b) Verbindungsstücke (70) zur Verbindung mit den Schläuchen (66) umfasst, die mit Ausrichtungsmitteln ausgestattet sind.

11. Die automatische Vorrichtung gemäß einem oder mehreren der obigen Ansprüche, **dadurch gekennzeichnet, dass** sie automatische Saugnapf-Elemente (50) umfasst, die am Saugnapf-Körper (51) einen unteren Saugnapf umfassen und einen Bereich begrenzen, der mit einer unteren Ansaugleitung (54) zur Verbindung mit einer Unterdruck-Quelle (VS) verbunden ist, **dadurch gekennzeichnet, dass** sie Steuerungsmittel (52) zum Steuern der unteren Ansaugleitung (54) umfasst, die für eine freie Verbindung mit dem Bereich, der mit der Ansaugleitung (54) verbunden ist, wenn das Saugnapf-Element (50) automatisch auf den Werktisch (3) aufgelegt wird, ausgebildet sind.

12. Die automatische Vorrichtung gemäß Ansprcuh 11, **dadurch gekennzeichnet, dass** das Steuerungsmittel ein Strömungs-Steuerungselement (52) umfasst, das in einem Sitz (53) enthalten ist, in den die untere. Ansaugleitung (54) führt, wobei das untere Ende des Strömungs-Steuerungselements (52) aus der unteren Fläche des Saugnapf-Körpers (51) herausragt.

13. Die Vorrichtung gemäß Anspruch 12, **dadurch gekennzeichnet, dass** sie elastische Mittel (55) umfasst, welche geeignet sind, das Strömungs-Steuerungselement (52) zu schieben.

14. Die Vorrichtung gemäß Anspruch 12 oder 13, **dadurch gekennzeichnet, dass** das Strömungs-Steuerungselement (52) stumpfförmig ist.

## Revendications

1. Machine automatique pour l'usinage de matériaux en forme de plaques, en particulier des plaques de verre, comprenant un châssis de support (2) qui présente un plan de travail (3) pour le support des plaques (4) à usiner au moyen d'éléments à ventouse (5, 6, 50), et un magasin à outils (8), un cadre (10) pour le support d'une tête d'usinage (9) étant associé audit châssis (2), ladite tête d'usinage (9) étant apte à se déplacer au dessus dudit plan de travail (3), et un outil de prélèvement (20) qui peut être déplacé par ladite tête d'usinage (9) afin de prélever des éléments à ventouse (5, 6, 50) depuis un magasin (15, 60) d'éléments à ventouse et de positionner les éléments à ventouse (5, 6, 50) sur ledit plan de travail (3) et/ou vice-versa, **caractérisée en ce que** lesdits éléments à ventouse (5, 6, 50) sont directement reliés à des tuyaux d'air et de vide (7, 61, 62) et **en ce que** ladite machine automatique comprend en outre un élément de prélèvement de précision (80) qui présente une plaque pneumatique (81) agencée excentriquement par rapport à l'axe d'un cône (25) pour le raccord à la tête d'usinage, un logement (82) étant formé sur l'élément de prélèvement en alignement axial avec ledit cône (25) afin de recevoir de façon amovible un dispositif de centrage (6b) d'une ventouse (6) avec dispositif de centrage.

2. Machine automatique selon la revendication 1, **caractérisée en ce que** ledit magasin de ventouses (15, 60) permet le positionnement d'un nombre d'éléments à ventouse (5, 6, 50) suffisant au moins pour une station de travail.

3. Machine automatique selon l'une quelconque des revendications précédentes, **caractérisée en ce que** ledit outil de prélèvement (20) peut être positionné de façon amovible dans ledit magasin à outils (8).

4. Machine automatique selon les revendications précédentes, **caractérisée en ce que** ledit outil de prélèvement (20) présente une pince de préhension (21) constituée par des tiges mobiles axiales (22) qui sont insérés dans des trous de centrage (23) prévus dans la partie supérieure desdits éléments à ventouse (5, 6, 50).

5. Machine automatique selon une ou plusieurs des revendications précédentes, **caractérisée en ce que** ledit outil de prélèvement (20) comprend une plaque pneumatique (30) qui peut être reliée à une source de vide (VS) et peut venir en prise avec les ventouses (5a, 6a) agencées au niveau d'une extrémité supérieure desdits éléments à ventouse (5, 6, 50).

6. Machine automatique selon une ou plusieurs des revendications précédentes, **caractérisée en ce qu'**elle comprend, sur ledit magasin (15, 60) d'éléments à ventouse, des moyens de positionnement (26) pour lesdits éléments à ventouse (5, 6, 50).

7. Machine automatique selon la revendication 6, **caractérisée en ce que** lesdits moyens de positionnement (26) pour lesdits éléments à ventouse (5, 6, 50) sont constitués par deux éléments tiges mutuellement différents.

8. Machine automatique selon la revendication 7, **caractérisée en ce que** lesdits éléments tiges (26) présentent des dimensions mutuellement différentes.

9. Machine automatique selon l'une quelconque des revendications précédentes, **caractérisée en ce qu'**elle comprend, dans ledit magasin de ventouses (60), un râtelier de blocage de gaine (67) pour retenir les gaines (65) pour raccorder les tuyaux à spirale (61, 62) desdits éléments à ventouse (5, 6, 50) et les tuyaux semi-rigides (66) pour la connexion aux collecteurs d'air et de vide.

10. Machine automatique selon une ou plusieurs des revendications précédentes, **caractérisée en ce qu'**elle comprend, au moins sur lesdits éléments à ventouse (6) avec élément de centrage (6b), des connecteurs (70) pour le raccord aux tuyaux (66), munis de moyens d'orientation.

11. Machine automatique selon une ou plusieurs des revendications précédentes, **caractérisée en ce qu'**elle comprend des éléments à ventouse automatiques (50) qui comprennent, sur le corps de ventouse (51), une ventouse inférieure et délimitent une région qui est raccordée à un conduit d'aspiration inférieur (54) pour la connection à une source de vide (VS), **caractérisée en ce qu'**elle comprend des moyens de contrôle (52) pour contrôler ledit conduit d'aspiration inférieur (54) qui sont adaptés pour une connection libre à ladite région raccordée audit conduit d'aspiration (54) lorsque l'élément à ventouse (50) est posé automatiquement sur ledit plan de travail (3).

12. Machine automatique selon la revendication 11, **caractérisée en ce que** lesdits moyens de contrôle comprennent un élément de contrôle de flux (52) qui est contenu dans un logement (53) à l'intérieur duquel ledit conduit d'aspiration inférieur (54) débouche, l'extrémité inférieur dudit élément de contrôle de flux (52) faisant saillie depuis la face inférieure dudit corps de ventouse (51).

13. Machine selon la revendication 12, **caractérisée en ce qu'**elle comprend des moyens élastiques (55) appropriés à pousser ledit élément de contrôle de flux (52).

14. Machine selon une ou plusieurs des revendications 12 et 13, **caractérisée en ce que** ledit élément de contrôle de flux (52) est de forme tronconique.
